# DEMANDE DE BREVET EUROPEEN

(11) **EP 1 958 551 A1**
(43) Date de publication de la demande: **20.08.2008**
(21) Numéro de dépôt: 08003030.7
(22) Date de dépôt: 19.02.2008
(51) Int. Cl.: A47J 27/21, A47J 36/08

(54) **Appareil de cuisson et d'égouttage d'aliments contenus dans un liquide comprenant des perforations d'évaporation et des perforations d'égouttage**

(30) Priorité: 19.02.2007 FR 0753332
(71) Demandeur: KARIS, 75002 Paris (FR)
(72) Inventeur: Baghat, Amaury, 75004 Paris (FR)
(74) Mandataire: Bredema

(57) **Abrégé**

L'invention concerne un appareil de cuisson et d'égouttage (1) d'aliments contenus dans un liquide, du type comprenant un récipient (2) pourvu d'un couvercle (3) amovible lequel présente, sur sa partie inférieure, une jupe (8) comprenant deux séries de perforations, la première série de perforations constituant des orifices pour l'échappement de la vapeur d'eau formée au cours de la cuisson, la deuxième série de perforations constituant des orifices d'égouttage.

## Description

L'invention concerne un appareil destiné à cuire et égoutter des aliments contenus dans un liquide.

Par l'expression « contenus dans un liquide », on entend le liquide dans lesquels sont cuits les aliments, ou le liquide éventuellement extrait de la cuisson des aliments, tel que la graisse.

La préparation d'un grand nombre de plats requiert que les aliments soient cuits dans un liquide de cuisson puis égouttés. Citons par exemple la cuisson de pâtes, riz ou équivalents lesquels sont cuits dans de l'eau puis égouttés en fin de cuisson. On peut également être amené, en cours de cuisson de certains aliments, de devoir diminuer la quantité de liquide dans lequel ils cuisent, voire enlever la graisse ou le jus extrait de ces derniers lors de leur cuisson.

Traditionnellement, la cuisson des aliments avec le liquide est réalisée dans un récipient, et l'égouttage avec un autre ustensile (passoire ou équivalent). Cette méthode présente toutefois des inconvénients. Elle requiert tout d'abord de manipuler simultanément deux ustensiles : le récipient dans lequel sont cuits les aliments et la passoire dans laquelle est versée le contenu du récipient pour être égoutté. Cette manipulation exige une certaine force et dextérité. En outre, elle se révèle dangereuse dans la mesure où le récipient devant être manipulé est généralement extrêmement chaud.

Pour tenter de palier certains de ces inconvénients, de nombreux dispositifs, combinant le récipient de cuisson et l'ustensile d'égouttage, ont été proposés.

En particulier, il a été proposé dans le brevet américain US 5 653 881 un ustensile combinant les caractéristiques d'un récipient de cuisson avec celles d'un égouttoir. Dans un mode de réalisation particulier, l'ustensile comprend un récipient présentant un bec verseur et un couvercle. Le couvercle comprend une jupe s'étendant vers le bas, laquelle jupe comporte une section d'égouttage. Le couvercle comprend également des fentes en forme de « L » inversé coopérant respectivement avec des protubérances formées sur la paroi interne du récipient. Les fentes et les protubérances sont disposées de sorte que, lorsqu'un utilisateur tourne un couvercle, dans la position d'égouttage, les protubérances se mettent en prise avec les portions horizontales des fentes, fixant ainsi le couvercle au récipient.

Lors de l'utilisation de l'ustensile, le couvercle est placé sur le récipient de sorte que la section d'égouttage ne communique pas avec le bec verseur. Dans cette position (position fermée), la jupe du couvercle scelle l'ouverture créée par le bec verseur. Une fois la cuisson terminée et que l'utilisateur souhaite égoutter les aliments cuits, il tourne le couvercle pour aligner la section d'égouttage de la jupe avec le bec verseur (position d'égouttage). Dans cette position, les protubérances du récipient sont engagées dans la portion horizontale des fentes de la jupe du couvercle, et le couvercle maintenu fixé sur le récipient. L'utilisateur peut alors manipuler le récipient avec les deux mains sans risque que le couvercle ne se sépare du récipient.

Ce type d'ustensile convient pour une cuisson à l'étouffée, et éventuellement une cuisson sous pression lorsque la fermeture du récipient est réalisée de façon hermétique. Il n'est en revanche pas adapté à la cuisson d'aliments partiellement couverts, ou du moins à une cuisson nécessitant une évaporation partielle de l'eau en cours de cuisson.

L'invention vise notamment à pallier les inconvénients de l'art antérieur en proposant un ustensile de cuisson d'aliments dans un liquide permettant conjointement une évaporation de l'eau formée en cours de cuisson et un égouttage des aliments.

A cet effet, et selon un premier aspect, l'invention concerne un appareil de cuisson et d'égouttage d'aliments contenus dans un liquide, du type comprenant :
- un récipient pourvu d'un couvercle amovible, ledit récipient comprenant au moins une paroi comportant au moins un orifice de versement du liquide contenu dans ledit récipient, ledit couvercle présentant, sur sa partie inférieure, une jupe comprenant des perforations, ladite jupe étant agencée pour être maintenue contre la paroi du récipient lorsque le récipient est pourvu du couvercle, et
- des moyens de positionnement du couvercle sur le récipient, ledit couvercle étant apte à passer d'une position de cuisson à une position d'égouttage, et inversement, par rotation autour d'un axe vertical du couvercle lorsqu'il est positionné sur le récipient.

L'appareil de cuisson et d'égouttage est remarquable en ce que la jupe comprend deux séries de perforations agencées pour que, lorsque le couvercle est positionné sur le récipient en position de cuisson, l'une des séries des perforations est disposée devant l'orifice de versement, et lorsque le couvercle est positionné sur le récipient en position d'égouttage, l'autre série de perforations est disposée devant l'orifice de versement, la première série de perforations constituant des orifices pour l'échappement de la vapeur d'eau formée au cours de la cuisson, la deuxième série de perforations constituant des orifices d'égouttage.

Avantageusement, les deux séries de perforations sont disposées écartées l'une de l'autre selon un écartement angulaire inférieur à 90 degrés, et de préférence, inférieur à 45 degrés. Une telle disposition permet ainsi, par un mouvement réduit de rotation du couvercle sur le récipient, de passer rapidement de la position de cuisson à la position d'égouttage et inversement.

Avantageusement, les moyens de positionnement du couvercle sur le récipient comportent au moins une encoche formée dans la jupe du couvercle, ladite encoche étant destinée à coopérer avec une saillie située sur la paroi du récipient.

Plus particulièrement, l'encoche comportera deux branches s'étendant en sens opposé, l'extrémité fermée de chaque branche définissant, en association avec la saillie du récipient, l'une des deux positions du couvercle sur le récipient. Et selon une configuration particulière de l'invention, l'encoche présentera une forme en « T », chacune des extrémités de la branche supérieure de la forme en « T » définissant, en association avec la saillie du récipient, l'une des deux positions du couvercle sur le récipient.

Avantageusement, les moyens de positionnement comprennent des moyens d'indexation du couvercle sur le récipient.

Il pourra également être prévu que la jupe du couvercle présente deux zones pourvues respectivement d'une des série de perforations, lesdites zones étant espacées l'une de l'autre par une zone non perforée. l'une des zones perforée présentant une densité de perforations inférieure à l'autre zone. Cette configuration présente l'avantage de définir deux positions distinctes du couvercle sur le récipient, l'une des positions étant strictement associée à l'échappement de la vapeur d'eau, l'autre position étant strictement associée à l'égouttage des aliments. Cette configuration requiert ainsi moins de précision dans le positionnement du couvercle sur le récipient.

D'autres objets et avantages de l'invention apparaîtront au cours de la description qui suit, faite en référence aux dessins annexés, dans lesquels :
- la figure 1 illustre une vue en perspective explosée d'un appareil de cuisson et d'égouttage selon un premier mode de réalisation de l'invention ; et
- la figure 2 illustre une vue de devant d'un couvercle de l'appareil de cuisson et d'égouttage selon un deuxième mode de réalisation de l'invention.

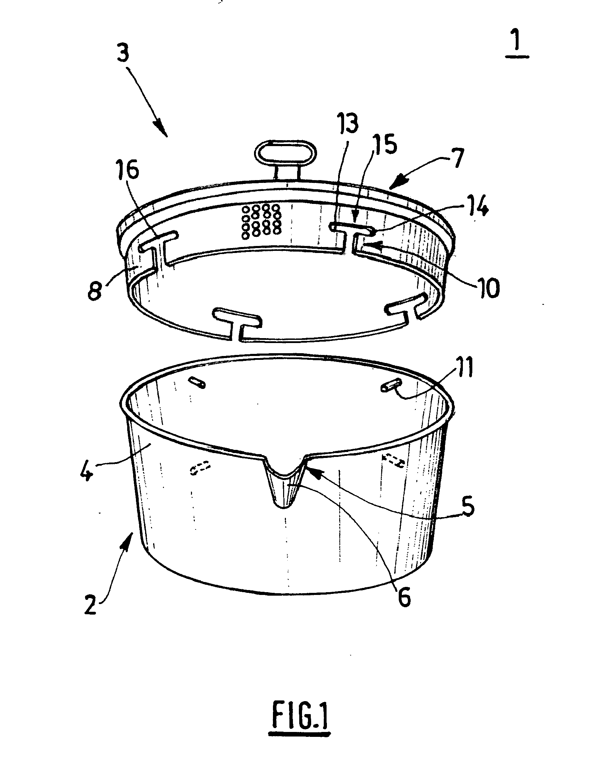

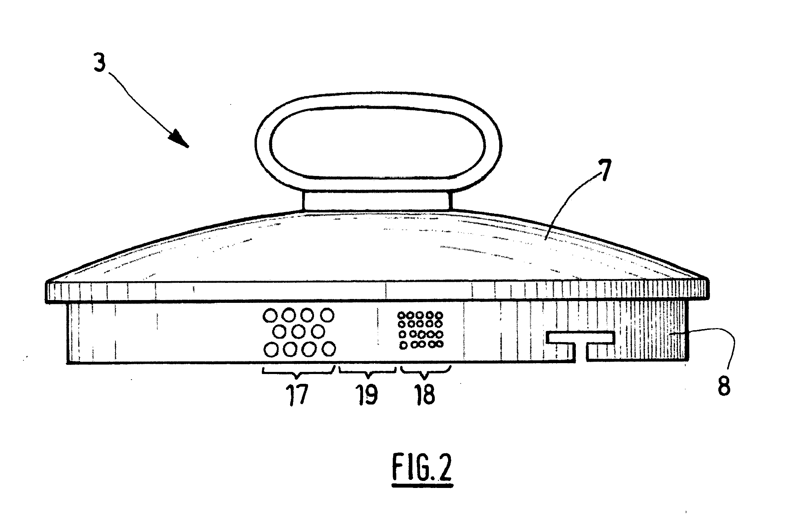

En relation avec les figures 1 et 2, il est décrit un appareil présentant les fonctionnalités conjointes de cuisson et d'égouttage 1 d'aliments contenus dans un liquide.

L'appareil 1 est formé d'un récipient 2 cylindrique pourvu d'un couvercle 3 amovible.

Le récipient 2 comporte une paroi 4 pourvue d'un orifice de versement 5 destinée à verser hors du récipient le liquide dans lesquels ont été cuits les aliments. Dans l'exemple illustré, l'orifice de versement 5 comporte un bec verseur 6.

Afin de permettre une manipulation plus aisée de l'appareil 1, en particulier lors de l'opération d'égouttage, le récipient 2 comprendra un moyen de préhension (non représenté). Avantageusement, le moyen de préhension pourra consister en deux anses diamétralement opposées, situées sur la face extérieure de la paroi du récipient, et disposées sur la face extérieure de la paroi du récipient, dans un plan longitudinal situé à 45 degrés du bec verseur.

Le couvercle 3 présente une partie couvrante 7 destinée à recouvrir l'ouverture du récipient 2.

La partie couvrante 7 est pourvue, sur sa partie inférieure, d'une jupe 8, agencée pour être en contact étroit avec la face interne de la paroi du récipient 2, lorsque l'ouverture du récipient 2 est fermée par le couvercle 3, tout en autorisant un mouvement de rotation de la jupe 8 selon un axe vertical. Par ailleurs, la jupe 8 est dimensionnée pour venir couvrir l'ouverture du bec verseur 6, ou du moins partiellement comme on le verra dans la partie décrivant la figure 2.

La jupe 8 comprend en outre une zone délimitée présentant une pluralité de perforations 9. Comme on le verra plus loin, une partie des perforations formera des perforations permettant l'échappement de la vapeur d'eau formée lors de la cuisson des aliments, la partie restante, éventuellement associée avec les perforations d'échappement de vapeur d'eau, formant des perforations permettant l'égouttage des aliments, i.e le versement hors du récipient du liquide de cuisson.

Par liquide de cuisson, on entend le liquide dans lesquels sont cuits les aliments, ou le liquide éventuellement extrait de la cuisson des aliments tel que la graisse.

L'appareil de cuisson et d'égouttage 1 comprend des moyens permettant de positionner le couvercle 3 sur le récipient 2 suivant que l'on souhaite procéder à la cuisson d'aliments, ou que l'on souhaite procéder à l'égouttage des aliments.

Plus spécifiquement, il s'agit de positionner en face de l'ouverture du bec verseur, ou bien les perforations d'échappement de vapeur lorsqu'on souhaite procéder à la cuisson d'aliments, ou bien les perforations d'égouttage lorsqu'on souhaite procéder à un égouttage. Le couvercle 3 sera disposé sur le récipient en position de cuisson dans le premier cas, et en position d'égouttage dans le deuxième cas.

Les moyens de positionnement du couvercle 3 sur le récipient 2 comprennent d'une part au moins une encoche 10 formée dans la jupe 8 du couvercle 3, et au moins une saillie 11 formée sur la face intérieure de la paroi du récipient 2, l'encoche 10 étant agencée pour recevoir la saillie 11.

La figure 1 illustre un appareil de cuisson et d'égouttage 1 comprenant quatre encoches et quatre saillies associées. Il est bien entendu évident qu'il s'agit d'un exemple particulier de réalisation de l'invention, le nombre d'encoches et de saillies ne se limitant pas à celui illustré. Il pourra en particulier être prévu une seule encoche et saillie correspondante.

Chaque encoche 10 comporte deux branches s'étendant en sens opposé, l'extrémité fermée de chaque branche définissant, en association avec la saillie 11 du récipient apte à recevoir ladite encoche 10, l'une des deux positions du couvercle sur le récipient. Selon une configuration avantageuse de l'invention illustrée sur la figure 1, les encoches présentent une forme en «T».

Chacune des extrémités 13, 14 de la branche supérieure 15 de la forme en « T » définit, en association avec la saillie 11 du récipient 2 apte à recevoir une encoche 10, la position de cuisson ou la position d'égouttage.

Ainsi configurés, les moyens de positionnement formés par au moins une encoche 10 et au moins une saillie 11 constituent des moyens d'indexation du couvercle 3 sur le récipient 2 dans une position déterminée (position de cuisson ou position d'égouttage).

Le principe de fonctionnement est le suivant. Le couvercle 3 est positionné au-dessus de l'ouverture du récipient 2, les encoches 10 du couvercle 3 étant disposées en vis-à-vis des saillies 11 du récipient 2. Le couvercle 3 est alors poussé selon un mouvement vertical, en direction du fond du récipient 2, la jupe 8 pénétrant dans le récipient 2, en contact étroit avec la face intérieure du récipient 2. Les encoches 10 s'engagent dans les saillies 11 correspondantes jusqu'à venir en butée sur une zone d'arrêt 16, dans la branche supérieure 15 de la forme en « T ». Le couvercle 3 est alors soumis à un mouvement de rotation autour de l'axe vertical, dans le sens des aiguilles d'une montre, jusqu'à ce que les encoches 10 viennent se positionner contre l'extrémité 14 de la branche supérieure 15 de la forme en « T ». L'ouverture du bec verseur est alors recouverte par une zone de la jupe 8 du couvercle 3 comportant, sur une partie seulement, des perforations définissant des perforations d'échappement de la vapeur d'eau. Le couvercle 3 est alors en position de cuisson. Le passage à la position d'égouttage du couvercle 3 est réalisé en imprimant au couvercle un mouvement de rotation dans le sens inverse des aiguilles d'une montre, jusqu'à ce que les encoches 10 viennent de positionner contre l'extrémité 13 de la branche supérieure 15 de la forme en « T ». L'ouverture du bec verseur est alors recouverte par une zone de la jupe 8 du couvercle 3 perforée, les perforations correspondant aux perforations d'égouttage.

Ainsi, en position de cuisson, la densité de perforations positionnées en vis-à-vis de l'ouverture du bec verseur sera inférieure à la densité de perforations positionnées en vis-à-vis de l'ouverture du bec verseur lorsque le couvercle est en position d'égouttage.

Selon une configuration particulière de l'invention, il pourra être prévu que les perforations d'échappement de la vapeur présente une configuration différente des perforations d'égouttages (tailles, formes, etc.).

La figure 1 montre un couvercle 3 présentant une jupe 8 comprenant une seule zone de perforations comportant d'une part les perforations d'échappement de vapeur, et d'autre part les perforations d'égouttage. Selon une autre configuration de l'invention, il peut être prévu que la jupe 8 du couvercle présentes deux zones 17, 18 pourvues de perforations, lesdites zones 17, 18 étant espacées l'une de l'autre par une zone non perforée 19 (cf. figure 2).

Cette configuration présente l'avantage de définir deux positions distinctes du couvercle 3 sur le récipient 2, l'une des positions étant strictement associée à l'échappement de la vapeur d'eau, l'autre position étant strictement associée à l'égouttage des aliments. Elle ne requiert ainsi pas de précision dans le positionnement du couvercle sur le récipient.

Elle présente également l'avantage de définir une position complémentaire du couvercle 3 sur le récipient, correspondant à une position dans laquelle l'évaporation est réduite. Dans cette configuration en effet, la jupe 8 du couvercle 3 est configurée pour ne pas obturer totalement l'ouverture du bec verseur 6, mais de manière à ne laisser qu'un petit passage entre le récipient 2 et le couvercle. Le couvercle 3 est dans cette position complémentaire lorsque les encoches 10 sont en butée contre la zone d'arrêt. Ainsi, lorsque les encoches 10 sont positionnées dans les saillies 11, sur la zone d'arrêt, la zone non perforée 19 se positionne devant l'ouverture du bec verseur pour une obturation partielle.

Comme précédemment, les zones perforées pourront présenter des densités de perforations, ainsi que des configurations de perforations différentes.

L'écartement entre les extrémités de la branche supérieure sera déterminé en fonction de la distance séparant les deux zones 17 et 18 perforées. Afin de permettre un passage rapide et aisé entre les deux zones perforées 17, 18, il est avantageux de les disposer sur la jupe 8 relativement proches l'une de l'autre. Plus spécifiquement, il sera avantageux de prévoir deux séries de perforations écartées l'une de l'autre selon un écartement angulaire inférieur à 90 degrés, et de préférence inférieur à 45 degrés. Ainsi, compte tenu de la « proximité » des séries de perforation, le mouvement nécessaire pour passer le couvercle 3 d'une position de cuisson à une position d'égouttage, et inversement, reste limité (on parle de mouvement « localisé »).

Le caractère hermétique pourra être amélioré par la présence d'un joint disposé sous la partie couvrante 7, le long de la jonction partie couvrante 7 / jupe 8.

L'invention est décrite dans ce qui précède à titre d'exemple. II est entendu que l'homme du métier est à même de réaliser différentes variantes de l'invention sans pour autant sortir de l'invention.

## Revendications

1. Appareil de cuisson et d'égouttage (1) d'aliments contenus dans un liquide, du type comprenant un récipient (2) pourvu d'un couvercle (3) amovible, ledit récipient (2) comprenant au moins une paroi (4) comportant au moins un orifice de versement (5) du liquide contenu dans ledit récipient, ledit couvercle (3) présentant, sur sa partie inférieure, une jupe (8) comprenant des perforations (9), ladite jupe (8) étant agencée pour être maintenue contre la paroi (4) du récipient (2) lorsque ledit récipient (2) est pourvu du couvercle (3), l'appareil de cuisson et d'égouttage (1) comprenant en outre des moyens de positionnement du couvercle sur le récipient (2), ledit couvercle (3) étant apte à passer d'une position de cuisson à une position d'égouttage, et inversement, par rotation autour d'un axe vertical du couvercle (3) lorsqu'il est positionné sur le récipient (2), l'appareil de cuisson et d'égouttage (1) étant **caractérisé en ce que** la jupe (8) comprend deux séries de perforations agencées pour que, lorsque le couvercle (3) est positionné sur le récipient (2) en position de cuisson, l'une des séries des perforations est disposée devant l'orifice de versement (5), et lorsque le couvercle (3) est positionné sur le récipient (2) en position d'égouttage, l'autre série de perforations est disposée devant l'orifice de versement (5), la première série de perforations constituant des orifices pour l'échappement de la vapeur d'eau formée au cours de la cuisson, la deuxième série de perforations constituant des orifices d'égouttage.

2. Appareil de cuisson et d'égouttage (1) selon la revendication 1, **caractérisé en ce que** les deux séries de perforations sont disposées écartées l'une de l'autre selon un écartement angulaire inférieur à 90 degrés.

3. Appareil de cuisson et d'égouttage (1) selon la revendication 1 ou la revendication 2, **caractérisé en ce que** les deux séries de perforations sont disposées écartées l'une de l'autre selon un écartement angulaire inférieur à 45 degrés.

4. Appareil de cuisson et d'égouttage (1) selon l'une quelconque des revendications 1 à 3, **caractérisé en ce que** les moyens de positionnement du couvercle (3) sur le récipient (2) comportent au moins une encoche (10) formée dans la jupe (8) du couvercle (2), ladite encoche (10) étant destinée à coopérer avec une saillie (11) située sur la paroi (4) du récipient (2).

5. Appareil de cuisson et d'égouttage (1) selon la revendication 4, **caractérisé en ce que** l'encoche (10) comporte deux branches s'étendant en sens opposé, l'extrémité fermée de chaque branche définissant, en association avec la saillie (11) du récipient, l'une des deux positions du couvercle (3) sur le récipient (2).

6. Appareil de cuisson et d'égouttage (1) selon la revendication 4 ou la revendication 5, **caractérisé en ce que** l'encoche (10) a une forme en « T », chacune des extrémités (13, 14) de la branche supérieure (15) de la forme en « T » définissant, en association avec la saillie (11) du récipient (2), l'une des deux positions du couvercle (3) sur le récipient (2).

7. Appareil de cuisson et d'égouttage (1) selon l'une quelconque des revendications précédentes, **caractérisé en ce que** les moyens de positionnement comprennent des moyens d'indexation du couvercle (3) sur le récipient (2).

8. Appareil de cuisson et d'égouttage (1) selon l'une quelconque des revendications précédentes, **caractérisé en ce que** la jupe (8) du couvercle (3) présente deux zones (17, 18) pourvues respectivement d'une des séries de perforations, lesdites zones étant espacées l'une de l'autre par une zone non perforée (19).

9. Appareil de cuisson et d'égouttage (1) selon la revendication précédente, **caractérisé en ce que** la zone non perforée (19) constitue une zone d'obturation partielle de l'orifice de versement (5).

10. Appareil de cuisson et d'égouttage (1) selon la revendication 8 ou la revendication 9, **caractérisé en ce que** l'une des zones perforée (17, 18) présente une densité de perforations inférieure à l'autre zone (18, 17).

11. Appareil de cuisson et d'égouttage (1) selon l'une quelconque des revendications précédentes, **caractérisé en ce que** l'orifice de versement (5) comporte un bec verseur (6).
